# EUROPÄISCHE PATENTANMELDUNG

(11) **EP 2 722 568 A1**
(43) Veröffentlichungstag der Anmeldung: **23.04.2014**
(21) Anmeldenummer: 12188850.7
(22) Anmeldetag: 17.10.2012
(51) Int. Cl.: F16K 7/14

(54) **Membranventil mit mindestens zwei Funktionsflächen**

(71) Anmelder: RECO Gesellschaft für Industriefilterregelung mbH, 53844 Troisdorf (DE)
(72) Erfinder: Arzt, Ingo, 53844 Troisdorf (DE)
(74) Vertreter: Wagner, Matthias

(57) **Zusammenfassung**

Membranventil (12) mit mindestens zwei Funktionsflächen (8,9), wobei die mindestens zwei Funktionsflächen (8,9) in einer Ebene angeordnet sind.

## Beschreibung

### Stand der Technik

Die Erfindung geht aus von einem Membranventil nach dem Oberbegriff des Anspruchs 1. Außerdem betrifft diese Erfindung ein Ventilmodul mit diesem Membranventil. Weiterhin betrifft diese Erfindung ein Verfahren zur Erzeugung eines Druckimpulses mit diesem Ventilmodul.

Bekannte textile Filterkörper von Filteranlagen müssen regelmäßig gereinigt werden. Durch die Entfernung von angelagertem Filtergut wird die Funktion der Filterkörper aufrechterhalten.

Herkömmlicherweise geschieht diese Reinigung durch einen Druckluftimpuls, der die Filterkörper durchläuft und angelagertes Filtergut löst. Das gelöste Filtergut kann ohne nennenswerten Zeit- und Energieaufwand entfernt werden.

Die Höhe des Druckluftimpulses, der mit einem einzigen Membranventil erzeugt werden kann, ist nach oben durch die Massenträgheit der Membran begrenzt.

Aus der Druckschrift EP 1 997 547 B1 ist ein Verfahren zum Rückspülen von Filtern aus dünnwandigen, textilen Filterkörpern durch Einsatz von Druckimpulsen in einem Spülluftstrom bekannt. Dazu werden mehrere Membranventile jeweils kurzzeitig geöffnet, wobei die Öffnungszeitpunkte so aufeinander abgestimmt sind, dass von den Membranventilen freigesetzte Teilimpulse zeitgleich am Eingang der gemeinsamen Spülleitung ankommen. Die Ausgänge dieser Membranventile führen als Entnahmeleitungen unter einem spitzen Winkel in einem Hosenrohr zusammen. Nachteilig ist dabei, dass die Realisierung dieses Verfahrens vergleichsweise aufwendig ist. Insbesondere ist die Anordnung der Membranventile derart kompliziert, dass dieses Verfahren mit herkömmlichen Druckluftspeichern schwierig zu realisieren ist.

Es ist daher die Aufgabe dieser Erfindung, die Nachteile des Stands der Technik zu beseitigen.

### Offenbarung der Erfindung

Diese Aufgabe wird mit dem Membranventil gemäß dem Gegenstand des Anspruchs 1 gelöst.

Eine Funktionsfläche im Sinne dieser Erfindung ist dabei jegliche Fläche, die die Funktion einer Ventilmembran erfüllt, die also zum Öffnen und Schließen des Membranventils betätigt wird, wobei es sich bei einer Funktionsfläche auch um eine herkömmliche Ventilmembran handeln kann.

Das erfindungsgemäße Membranventil hat gegenüber dem Stand der Technik den Vorteil, dass das Membranventil mit einem herkömmlichen Druckgasspeicher verwendet werden kann. Dadurch, dass die Funktionsflächen in einer Ebene liegen, ist das Membranventil auf einfache Weise in herkömmliche Druckgasspeicher integrierbar. Die Montage des erfindungsgemäßen Membranventils mit herkömmlichen Druckgasspeichern ist vergleichsweise einfach und es müssen keine Anpassungen des Druckgasspeichers selbst vorgenommen werden.

Die Anzahl der Funktionsflächen ist nicht auf zwei beschränkt, d.h. das Membranventil kann drei, vier, fünf oder mehr Funktionsflächen aufweisen, die in einer Ebene liegen. Falls das Membranventil drei oder mehr Funktionsflächen aufweist, ist es bevorzugt vorgesehen, dass die drei oder mehr Funktionsflächen nicht nur in einer Ebene liegen, sondern auch in einer Linie angeordnet sind. Dies erleichtert vorteilhaft die Montage des Membranventils mit herkömmlichen Druckgasspeichern. Diese Flexibilität in der Anzahl der Funktionsflächen ermöglicht vorteilhaft die Erzeugung von großen Druckimpulsen mit geringen Öffnungszeiten. Die Massen der einzelnen Funktionsflächen können gering gehalten werden, sodass die Massenträgheit der Funktionsflächen gering gehalten werden kann. Dadurch sind kürzere Öffnungs- und Schließzeiten erreichbar, sodass größere Druckimpulse bei kürzeren Öffnungszeiten erzielbar sind.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung ist vorgesehen, dass das Membranventil einen Ventilkörper mit mindestens zwei Ventilsitzen aufweist, wobei die mindestens zwei Ventilsitze in einer Ebene liegen. Dadurch ist vorteilhaft eine vergleichsweise einfache Realisierung der Erfindung möglich. Die Funktionsflächen sitzen auf den Ventilsitzen auf, sodass die Funktionsflächen in einer Ebene angeordnet sind.

Gemäß einer anderen bevorzugten Weiterbildung ist vorgesehen, dass der Ventilkörper mindestens zwei Eingangsrohre und ein Ausgangsrohr aufweist, wobei die Eingangsrohre in das Ausgangsrohr münden. Dadurch ist vorteilhaft eine besonders einfache Verwendung des Ventilkörpers mit herkömmlichen Druckgasspeichern möglich.

Weiterhin ist es bevorzugt möglich, dass der Ventilkörper drei, vier oder mehr Eingangsrohre aufweist, die in das Ausgangsrohr münden.

Besonders bevorzugt ist jeder Funktionsfläche genau ein Eingangsrohr zugeordnet, sodass vorteilhaft jeder erzeugte Teildruckimpuls durch ein eigenes Eingangsrohr läuft, wodurch eine gegenseitige Beeinflussung der Teildruckimpulse verhindert werden kann. Dadurch wird die Erzeugung des (Gesamt-) Druckimpulses, der sich aus den Teildruckimpulsen zusammensetzt, wesentlich verbessert.

Gemäß einer anderen bevorzugten Weiterbildung ist vorgesehen, dass sich das Ausgangsrohr senkrecht zu derjenigen Ebene erstreckt, in der die Ventilsitze liegen. Dadurch ist zum Einen eine einfache Verwendung des Ventilkörpers mit herkömmlichen Druckgasspeichern möglich, zum Anderen ist eine vergleichsweise verlustarme Druckimpulserzeugung möglich.

Gemäß einer anderen bevorzugten Weiterbildung ist vorgesehen, dass der Ventilkörper mit einem Spritzgussverfahren herstellbar ist. Dadurch ist vorteilhaft eine Herstellung mit herkömmlichen Fertigungsverfahren möglich, wobei durch das Spritzgussverfahren vergleichsweise eine besonders schnelle und kostengünstige Herstellung des Ventilkörpers möglich ist.

Gemäß einer anderen bevorzugten Weiterbildung ist vorgesehen, dass der Ventilkörper ein Polymermaterial aufweist, bevorzugt ein Polyamidmaterial, besonders bevorzugt ein Polyphtalamidmaterial.

Gemäß einer anderen bevorzugten Weiterbildung ist vorgesehen, dass der Ventilkörper ein glasfaserverstärktes Polyphtalamidmaterial aufweist, wobei der Glasfaseranteil zwischen 20 und 80 Gew. % beträgt, bevorzugt zwischen 30 und 70 Gew. %, besonders bevorzugt zwischen 40 und 60 Gew. % und ganz besonders bevorzugt zwischen 45 und 55 Gew. %. Dadurch ist vorteilhaft eine besonders wärmebeständige Realisierung des Ventilkörpers möglich, wobei zusätzlich eine vergleichsweise steife, feste und chemikalienbeständige Realisierung des Ventilkörpers möglich ist.

Zur Funktionalität des Membranventils sei das Folgende ausgeführt. Das Membranventil kann sich in zwei Stellungen befinden. Das Membranventil kann sich in einer geschlossenen Stellung und in einer geöffneten Stellung befinden. In der geschlossenen Stellung verschließen die Funktionsflächen die Öffnungen der Eingangsrohre. In der geschlossenen Stellung kann demnach kein Gas aus einem Druckgasspeicher in die Eingangsrohre gelangen. Das Membranventil befindet sich immer in der geschlossenen Stellung, es sei denn, die Funktionsflächen werden betätigt. Wenn die Funktionsflächen betätigt werden, werden die Funktionsflächen von den Öffnungen der Eingangsrohre weggezogen, sodass die Öffnungen der Eingangsrohre freigegeben werden. Das Membranventil befindet sich in der geöffneten Stellung und Gas aus dem Druckgasspeicher kann in die Eingangsrohre gelangen. Die Öffnungszeit des Membranventils entspricht derjenigen Zeit, die die Funktionsflächen von den Öffnungen der Eingangsrohre weggezogen werden. Während dieser Öffnungszeit kann Gas aus dem Druckgasspeicher in die Eingangsrohre gelangen.

Falls der Ventilkörper drei, vier oder mehr Ventilsitze aufweist, weist das Membranventil dementsprechend drei, vier oder mehr Funktionsflächen auf. Als Funktionsflächen sind auch herkömmliche Ventilmembrane einsetzbar. Bevorzugt weisen die Funktionsflächen thermoplastisches Polyesterelastomermaterial bzw. thermoplastisches Copolyestermaterial auf.

Gemäß einer anderen bevorzugten Weiterbildung ist vorgesehen, dass die mindestens zwei Funktionsflächen pneumatisch und/oder elektrisch steuerbar sind. Dadurch ist es vorteilhaft möglich, die Funktionsflächen mit herkömmlichen Steuerungsmitteln, wie z.B. mit einem Elektromagneten, zu betätigen. Dadurch ist vorteilhaft eine vergleichsweise einfache Betätigung der Funktionsflächen möglich. Bevorzugt sind die Funktionsflächen gleichzeitig betätigbar, wobei bevorzugt die mindestens zwei Funktionsflächen mit nur einem Betätigungsmittel, wie z.B. einem Magnetventil, betätigbar sind. Dadurch können vorteilhaft gleichzeitig mindestens zwei Teildruckimpulse erzeugt werden. Die Gleichzeitigkeit führt dann zu einem gleichzeitigen Durchqueren der Eingangsrohre und zu einem gleichzeitigen Ankommen der Teildruckimpulse im Ausgangsrohr. Dadurch ist vorteilhaft eine optimale Vereinigung der Teildruckimpulse zu einem (Gesamt-) Druckimpuls möglich.

Gemäß einer anderen bevorzugten Weiterbildung ist vorgesehen, dass die mindestens zwei Funktionsflächen einstückig ausgebildet sind. Dadurch ergibt sich vorteilhaft eine vergleichsweise einfache Herstellung der Funktionsflächen. Weiterhin ergibt sich so vorteilhaft eine vergleichsweise einfache Realisierung bzw. Anordnung der Funktionsflächen in einer Ebene. Da die Funktionsflächen bereits bei deren Herstellung in einer Ebene angeordnet werden können, ist ein aufwendiges Anordnen der Funktionsflächen in einer Ebene bei der Montage des Ventils nicht mehr notwendig. Dadurch wird vorteilhaft die Montage des Ventils erheblich vereinfacht. Außerdem reduziert sich dadurch die Anzahl der Einzelteile, die zur Montage des Ventils erforderlich sind, wodurch weiterhin die Herstellung wesentlich vereinfacht wird.

Bevorzugt weisen die einstückig ausgebildeten Funktionsflächen ein Polymermaterial auf, bevorzugt ein Polyamidmaterial, besonders bevorzugt ein Polyphtalamidmaterial.

Gemäß einer anderen bevorzugten Weiterbildung ist vorgesehen, dass die einstückig ausgebildeten Funktionsflächen ein glasfaserverstärktes Polyphtalamidmaterial aufweisen, wobei der Glasfaseranteil zwischen 20 und 80 Gew. % beträgt, bevorzugt zwischen 30 und 70 Gew. %, besonders bevorzugt zwischen 40 und 60 Gew. % und ganz besonders bevorzugt zwischen 45 und 55 Gew. %. Dadurch ist vorteilhaft eine besonders wärmebeständige Realisierung der einstückig ausgebildeten Funktionsflächen möglich, wobei zusätzlich eine vergleichsweise steife, feste und chemikalienbeständige Realisierung der Funktionsflächen möglich ist.

Gemäß einer anderen bevorzugten Weiterbildung ist vorgesehen, dass die einstückig ausgebildeten Funktionsflächen mit einem Spritzgussverfahren herstellbar sind. Dadurch ist vorteilhaft eine Herstellung mit herkömmlichen Fertigungsverfahren möglich, wobei durch das Spritzgussverfahren vergleichsweise eine besonders schnelle und kostengünstige Herstellung der einstückig ausgebildeten Funktionsflächen möglich ist.

Ein anderer Gegenstand der vorliegenden Erfindung betrifft ein Ventilmodul, aufweisend ein Membranventil nach einem der vorher beschriebenen Ausführungsbeispiele und einen Druckgasspeicher. Vorteilhaft ist als Druckgasspeicher ein herkömmlicher Druckgasspeicher verwendbar. Dadurch ergibt sich vorteilhaft eine besonders einfache und kostengünstige Realisierung des erfindungsgemäßen Ventilmoduls.

Gemäß einer anderen bevorzugten Weiterbildung ist vorgesehen, dass der Druckgasspeicher ein Strangpressprofil, bevorzugt aus einem Aluminiummaterial, umfasst. Dadurch ist vorteilhaft der Druckgasspeicher vergleichsweise einfach und kostengünstig herstellbar. Außerdem führt die Herstellung aus einem Aluminiummaterial zu einer Realisierung mit vergleichsweise geringem Gewicht und zu einer vergleichsweise guten Korrosionsbeständigkeit.

Gemäß einer anderen bevorzugten Weiterbildung ist vorgesehen, dass der Druckgasspeicher mit Luft und/oder einem inerten Gas, bevorzugt Stickstoff, gefüllt ist. Durch die Verwendung von Luft ist vorteilhaft eine vergleichsweise einfache Realisierung möglich. Durch die Verwendung eines inerten Gases, bevorzugt Stickstoff, ist vorteilhaft ein sauerstofffreier Betrieb des Ventilmoduls möglich.

Bevorzugt ist das Ventilmodul einsetzbar, um einen Druckimpuls zur Reinigung eines Filters zu erzeugen.

Ein anderer Gegenstand der vorliegenden Erfindung betrifft ein Verfahren zur Erzeugung eines Druckimpulses mit einem Ventilmodul nach einem der vorher beschriebenen Ausführungsbeispiele, wobei das Membranventil kurzzeitig geöffnet wird, wobei mindestens zwei Teildruckimpulse erzeugt werden, wobei die mindestens zwei Teildruckimpulse die Eingangsrohre durchqueren und zeitgleich im Ausgangsrohr ankommen und sich im Ausgangsrohr zu einem Druckimpuls vereinigen.

Vorteilhaft ist es dadurch möglich, dass der Druckanstieg zu Beginn der Druckimpulse deutlich schneller erfolgt, als wenn lediglich ein einziges Membranventil mit nur einer vergleichsweise großen Ventilmembran verwendet würde, wobei zugleich aufgrund der Anordnung der mindestens zwei Funktionsflächen in einer Ebene eine Realisierung des Verfahrens mit herkömmlichen Druckgasspeichern erfolgen kann.

Die Größe des Druckimpulses ist über die Anzahl der Funktionsflächen auf einfache Weise steuerbar. Dabei können vorteilhaft vergleichsweise kleine Funktionsflächen verwendet werden, die vergleichsweise schnell und mit geringem Kraftaufwand betätigt werden können.

Gemäß einer anderen bevorzugten Weiterbildung ist vorgesehen, dass die Funktionsflächen gleichzeitig betätigt werden. Dadurch ist ein gleichzeitiges Ankommen der Teildruckimpulse im Ausgangsrohr erreichbar, sodass die Vereinigung der Teildruckimpulse zum Druckimpuls optimiert werden kann. Bevorzugt beträgt die Öffnungszeit des Membranventils je Druckimpuls zwischen 90 und 110 Millisekunden.

Gemäß einer anderen bevorzugten Weiterbildung ist vorgesehen, dass der erzeugte Druckimpuls zum Spülen eines Filters aus dünnwandigen textilen Filterkörpern verwendet wird. Dazu durchquert der Druckimpuls das Ausgangsrohr und eine Spülleitung und gelangt zu den Filterkörpern, um diese zu durchströmen. Dadurch wird das auf den Filterkörpern befindliche Filtergut von den Filterkörpern gedrückt, sodass das Filtergut leicht entfernt werden kann. Dadurch ist vorteilhaft eine besonders effiziente und auch kostengünstige Reinigung herkömmlicher Filter möglich.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
**Figuren 1**, **2, 3, 4** **und** **5** schematisch einen Ventilkörper eines Membranventils gemäß einer beispielhaften Ausführungsform der vorliegenden Erfindung,
**Figuren 6** **und** **7** schematisch ein Membranventil gemäß einer beispielhaften Ausführungsform der vorliegenden Erfindung,
**Figuren 8** **und** **9** schematisch ein Ventilmodul gemäß einer beispielhaften Ausführungsform der vorliegenden Erfindung,
**Figur 10** ein Blockdiagramm, das den Ablauf des erfindungsgemäßen Verfahrens gemäß einer beispielhaften Ausführungsform darstellt,
**Figuren 11, 12, 13, 14****,** **15** eine schematische Darstellung eines Membranventils gemäß einer weiteren beispielhaften Ausführungsform der vorliegenden Erfindung,
**Figuren 16, 17,18** schematisch eine Darstellung der Funktionsflächen des Membranventils aus den Figuren 11 bis 15,
**Figuren 19, 20, 21** schematisch eine Darstellung des Ventilkörpers des Membranventils aus den Figuren 11 bis 15 und
**Figuren 22, 23, 24** schematisch eine Darstellung des Deckels des Membranventils aus den Figuren 11 bis 15.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

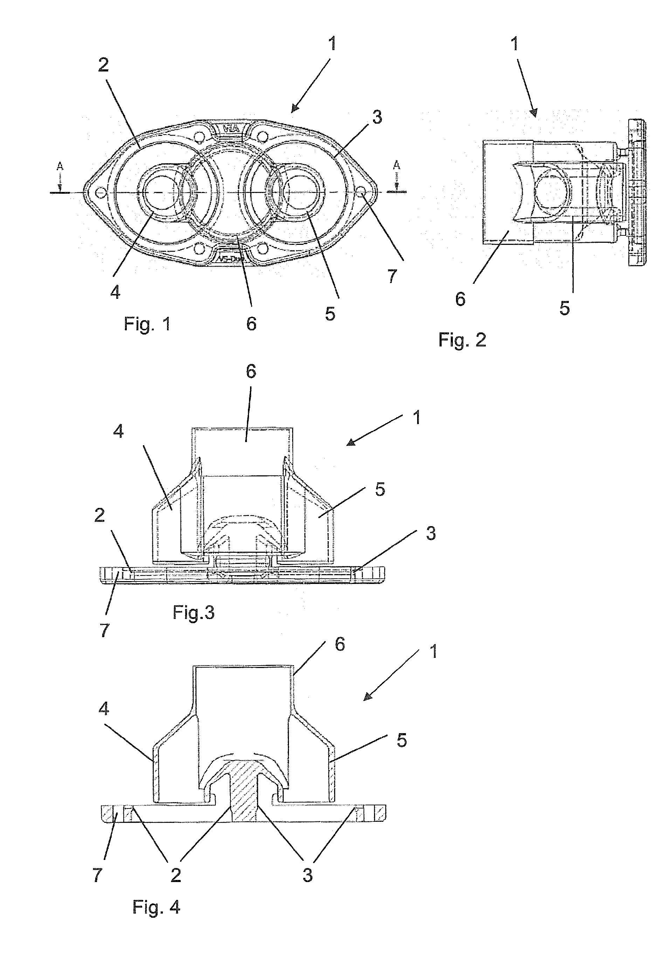

Die **Figuren 1, 2, 3, 4** **und** **5** zeigen schematisch einen Ventilkörper 1 eines Membranventils 12 gemäß einer Ausführungsform der vorliegenden Erfindung.

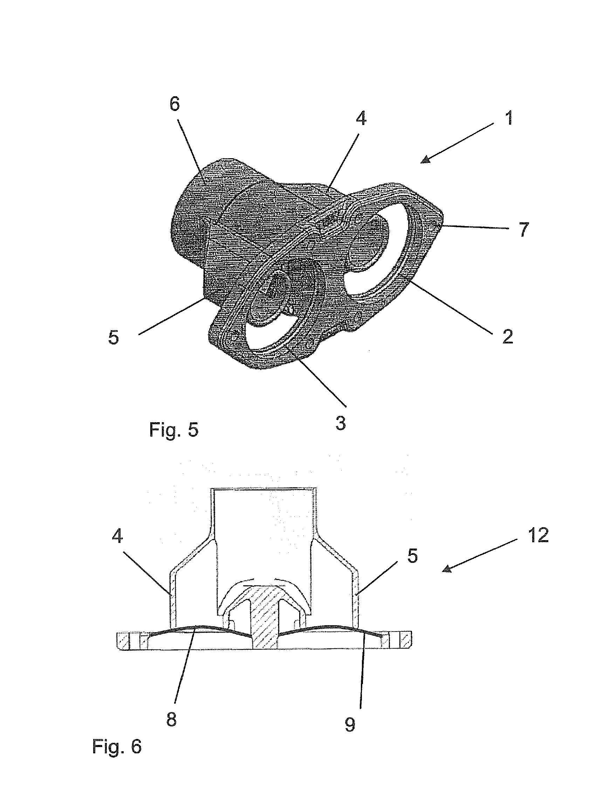

**Fig. 1** zeigt schematisch eine Draufsicht auf einen Ventilkörper 1 eines Membranventils 12 gemäß einer beispielhaften Ausführungsform der vorliegenden Erfindung. **Fig. 2** zeigt schematisch eine Seitenansicht des Ventilkörpers 1 aus Fig. 1. **Fig. 3** zeigt schematisch eine andere Seitenansicht des Ventilkörpers 1 aus Fig. 1. **Fig. 4** zeigt schematisch eine Ansicht entlang des Schnittes A-A, wie in Fig. 1 definiert. **Fig. 5** zeigt schematisch den Ventilkörper 1 in einer perspektivischen Darstellung.

Wie u.a. in **Fig. 4** dargestellt, weist der Ventilkörper 1 zwei Ventilsitze 2, 3, Eingangsrohre 4, 5 und ein Ausgangsrohr 6 auf. Die Ventilsitze 2, 3 sind bei dieser beispielhaften Ausführungsform in einer Ebene angeordnet. Die Eingangsrohre 4,5 münden in das Ausgangsrohr 6. Das Ausgangsrohr 6 erstreckt sich senkrecht zu derjenigen Ebene, in der die mindestens zwei Ventilsitze 2, 3 liegen. Mittels der Öffnungen 7 ist der Ventilkörper 1 auf einfache Weise an einem Druckgasspeicher 14 befestigbar. Dabei kann es sich bei den Öffnungen 7 um Gewindebohrungen handeln, so dass der Ventilkörper 1 auf einfache Weise am Druckgasbehälter 14 angeschraubt werden kann.

Der Ventilkörper 1 ist beispielsweise mit einem Spritzgussverfahren aus einem glasfaserverstärkten Polyphtalamidmaterial mit etwa 50 Gew. % Glasfaseranteil herstellbar.

Bezüglich der Figuren 1, 2, 3 und 5 wird auf die Ausführungen zu Figur 4 verwiesen.

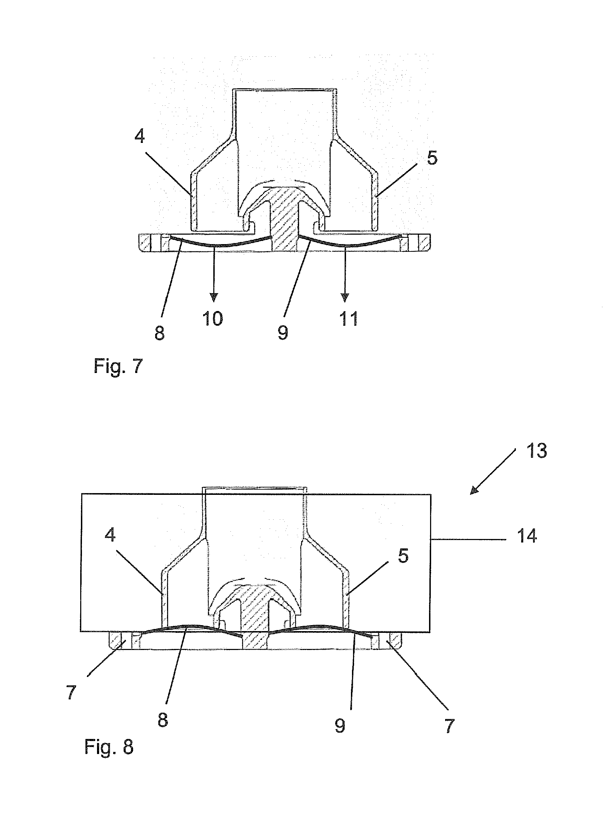

**Figuren 6** **und** **7** zeigen schematisch ein Membranventil 12 gemäß einer beispielhaften Ausführungsform der vorliegenden Erfindung. Das Membranventil 12 weist den Ventilkörper 1 aus den Figuren 1 bis 5 auf, sowie zwei Funktionsflächen 8, 9, die im Folgenden auch Ventilmembrane 8, 9 genannt werden. Die Ventilmembrane 8, 9 sind auf den Ventilsitzen 2,3 angeordnet. Als Ventilmembrane 8, 9 können bevorzugt herkömmliche Ventilmembrane verwendet werden. Bevorzugt weisen die Ventilmembrane 8, 9 thermoplastisches Polyesterelastomermaterial bzw. thermoplastisches Copolyestermaterial auf. Erfindungsgemäß liegen die Ventilmembrane 8, 9 in einer Ebene. Das Membranventil 12 weist weiterhin hier nicht dargestellte Deckel auf. Dabei ist es möglich, dass für jede Ventilmembran 8,9 ein einzelner Deckel oder dass für beide Ventilmembrane 8,9 von einem gemeinsamen Deckel abgedeckt werden.

Das Membranventil 12 kann sich in zwei Stellungen befinden. Das Membranventil 12 kann sich in einer geschlossenen Stellung und in einer geöffneten Stellung befinden. In der geschlossenen Stellung verschließen die Ventilmembrane 8, 9 die Öffnungen der Eingangsrohre 4, 5. In der geschlossenen Stellung kann demnach kein Gas aus einem Druckspeicher 14 in die Eingangsrohre 4, 5 gelangen. Das Ventil 12 befindet sich immer in der geschlossenen Stellung, es sei denn, die Ventilmembrane 8, 9 werden betätigt. Wenn die Ventilmembrane 8, 9 betätigt werden, werden die Ventilmembrane 8, 9 von den Öffnungen der Eingangsrohre 4, 5 weggezogen, sodass die Öffnungen der Eingangsrohre 4, 5 freigegeben werden. Das Membranventil 12 befindet sich in der geöffneten Stellung und Gas aus dem Druckspeicher 14 kann in die Eingangsrohre 4, 5 gelangen. Die Öffnungszeit des Membranventils 12 entspricht derjenigen Zeit, die die Ventilmembrane 8, 9 von den Öffnungen der Eingangsrohre 4, 5 weggezogen werden. Während dieser Öffnungszeit kann Gas aus dem Druckspeicher 14 in die Eingangsrohre 4, 5 gelangen.

**Fig. 6** zeigt schematisch das Membranventil 12 in der geschlossenen Stellung. Die Ventilmembrane 8, 9 verschließen die Öffnungen der Eingangsrohre 4, 5. In dieser geschlossenen Stellung befindet sich das Membranventil 12, wenn die Ventilmembrane 8, 9 nicht betätigt werden.

**Fig. 7** zeigt schematisch das Membranventil 12 aus Fig. 6 in der geöffneten Stellung, d.h. wenn die Ventilmembrane 8, 9 betätigt werden. Die Pfeile 10, 11 deuten Kräfte an, die die Ventilmembrane 8, 9 von den Öffnungen der Eingangsrohre 4, 5 wegziehen, sodass die Öffnungen der Eingangsrohre 4, 5 nicht mehr verschlossen sind und freigegeben werden. Das Erzeugen der erforderlichen Zugkräfte ist elektrisch, z.B. mittels eines Elektromagneten, oder pneumatisch möglich. Bevorzugt sind die Ventilmembrane 8, 9 gleichzeitig betätigbar. Weiter bevorzugt erfolgt die Betätigung der Ventilmembrane 8, 9 mit nur einem einzigen Betätigungsmittel.

**Fig. 8** zeigt schematisch ein erfindungsgemäßes Ventilmodul 13 gemäß einer beispielhaften Ausführungsform. Fig. 8 zeigt einen Querschnitt durch das Ventilmodul 13. Das Ventilmodul 13 weist auf das Membranventil 12 aus den Figuren 6 und 7, sowie einen Druckgasspeicher 14. Dadurch, dass in diesem Ausführungsbeispiel die Ventilsitze 2,3 in einer Ebene angeordnet sind bzw. dass die Ventilmembrane 8, 9 in einer Ebene angeordnet sind, ist es möglich, dass das erfindungsgemäße Membranventil 12 mit herkömmlichen Druckgasspeichern 14 verwendet werden können. Das Membranventil 12 kann z.B. mittels der Öffnungen 7 auf den Druckgasspeicher 14 geschraubt werden. Der Druckgasspeicher 14 ist mit Luft und/oder einem inerten Gas, wie z.B. Stickstoff, gefüllt. Der Druckgasspeicher 14 ist bevorzugt aus einem Strangpressprofil, weiter bevorzugt aus einem Aluminiummaterial, gefertigt. Das Membranventil 12 befindet sich in der geschlossenen Stellung, die bereits in der Fig. 6 beschrieben worden ist.

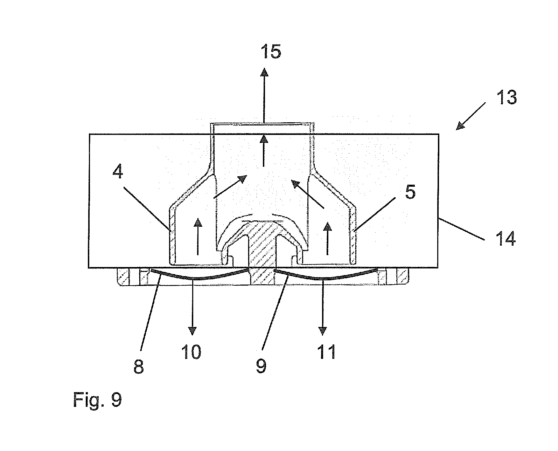

**Fig. 9** zeigt schematisch das Ventilmodul 13 aus Fig. 8 in der geöffneten Stellung. Wie bereits in Fig. 7 beschrieben, sind die Öffnungen der Eingangsrohre 4, 5 freigegeben worden, nachdem die Ventilmembrane 8, 9 von den Öffnungen der Eingangsrohre 8, 9 weggezogen wurden. Die Öffnungszeit beträgt beispielsweise 90 bis 110 Millisekunden. Der im Gasdruckspeicher 14 gespeicherte Gasdruck tritt in die Eingangsrohre 8, 9 ein und es entstehen zwei Teildruckimpulse. Die Teildruckimpulse durchqueren die Eingangsrohre 8, 9 und vereinigen sich im Ausgangsrohr 6 zu einem Druckimpuls, der das Ausgangsrohr durchquert und aus dem Ausgangsrohr 6 austritt. Mit den Pfeilen ist schematisch der Weg der Teildruckimpulse durch die Eingangsrohre 4,5 bzw. das Austrittsrohr 6 dargestellt. Die Austrittsrichtung des Druckimpulses ist mit dem Pfeil 15 gekennzeichnet. Wenn das Ausgangsrohr 6 mit einem Spülrohr verbunden wird, so kann der Druckimpuls durch das Spülrohr z.B. zu einem Filter geleitet werden, um das Filtergut, welches sich am Filterkörper festgesetzt hat, zu entfernen und die Funktionsfähigkeit des Filters zu gewährleisten.

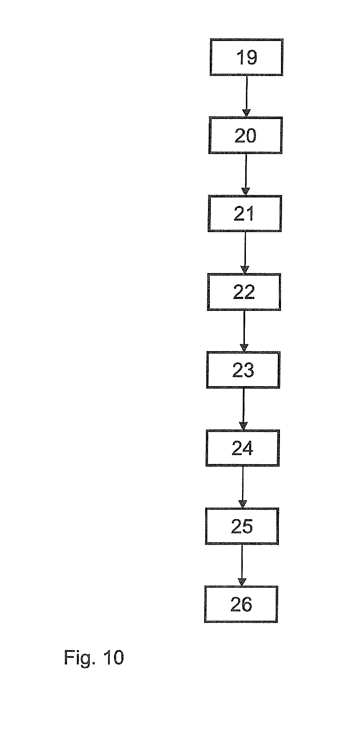

**Fig. 10** zeigt ein Blockdiagramm, das schematisch den Ablauf des erfindungsgemäßen Verfahrens gemäß einer beispielhaften Ausführungsform darstellt. Zu Beginn befindet sich das Membranventil 12 in der geschlossenen Stellung, sodass kein Gas aus dem Druckspeicher 14 in die Eingangsrohre 4, 5 gelangen kann (Block 19). Zur Erzeugung eines Druckimpulses mit einem erfindungsgemäßen Ventilmodul 13 wird das Membranventil 12 geöffnet (Block 20), d.h. die Funktionsflächen 8, 9 werden gleichzeitig betätigt, sodass die Öffnungen der Eingangsrohre 4, 5 gleichzeitig freigegeben werden. Die Öffnungszeit beträgt bevorzugt zwischen 90 und 110 Millisekunden. Durch das Öffnen des Membranventils 12 unter gleichzeitiger Betätigung der Funktionsflächen 8, 9 entstehen gleichzeitig zwei Teildruckimpulse (Block 21). Diese Teildruckimpulse durchqueren die Eingangsrohre 4, 5 (Block 22) und erreichen zeitgleich das Ausgangsrohr 6 (Block 23). Die Teildruckimpulse addieren sich im Ausgangsrohr 6 zu einem (Gesamt-) Druckimpuls (Block 24). Der Druckimpuls durchquert das Ausgangsrohr 6 (Block 25) und tritt aus dem Ausgangsrohr 6 aus (Block 26). Der ausgetretene Druckimpuls kann bevorzugt zu einem Filter geleitet werden, wenn das Ausgangsrohr 6 an eine Spülleitung angeschlossen wird. Der Druckimpuls durchquert den Filter bzw. die dünnwandigen textilen Filterkörpern und entfernt festgesetztes Filtergut von den Filterkörpern. Dadurch wird die Betriebsfähigkeit des Filters gewährleistet.

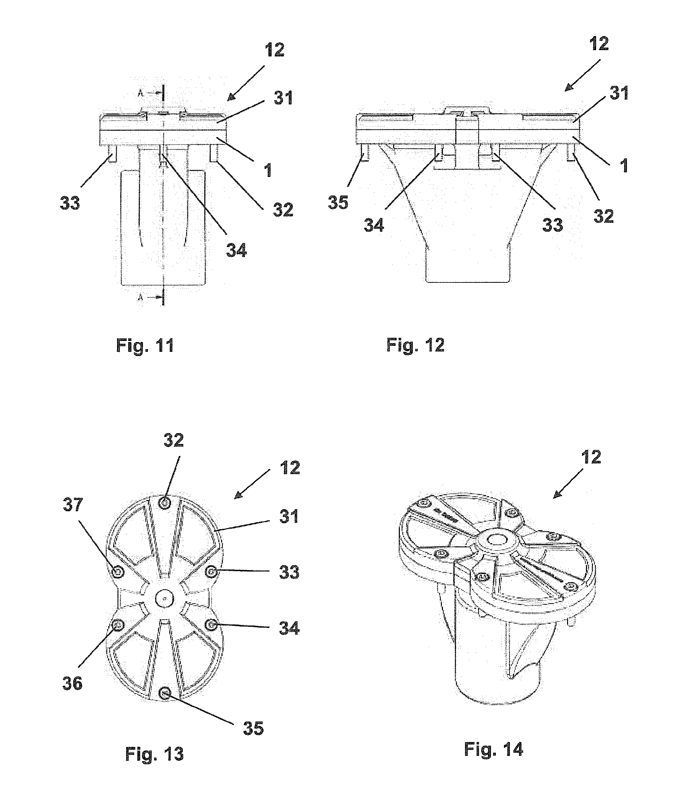

**Figur 11** zeigt eine schematische Darstellung eines Membranventils 12 gemäß einer weiteren beispielhaften Ausführungsform der vorliegenden Erfindung. Das Membranventil 12 weist einen Deckel 31 und den Ventilkörper 1 auf. Der Deckel 31 ist mit dem Ventilkörper 32 verbunden, z.B. mittels Schrauben 32, 33, 34. Es können aber auch andere Verbindungsmittel zur Verbindung des Deckels 31 mit dem Ventilkörper 1 angeordnet sein. Das Membranventil 12 kann mittels der Schrauben 32, 33, 34 mit einem Druckgasspeicher 14 verbunden werden.

**Figur 12** zeigt eine Seitenansicht des Membranventils aus Fig. 11. Zusätzlich ist noch eine Schraube 35 sichtbar, die den Deckel 31 mit dem Ventilkörper 1 verbindet.

**Figur 13** zeigt schematisch eine Draufsicht auf das Membranventil 12 aus Fig. 11 bzw. Fig. 12. Der Deckel 31 ist mit insgesamt sechs Schrauben 32, 33, 34, 35, 36, 37 mit dem Ventilkörper 1 verbunden.

**Figur 14** zeigt schematisch eine perspektivische Ansicht des Membranventils 12 aus den Figuren 11, 12 und 13.

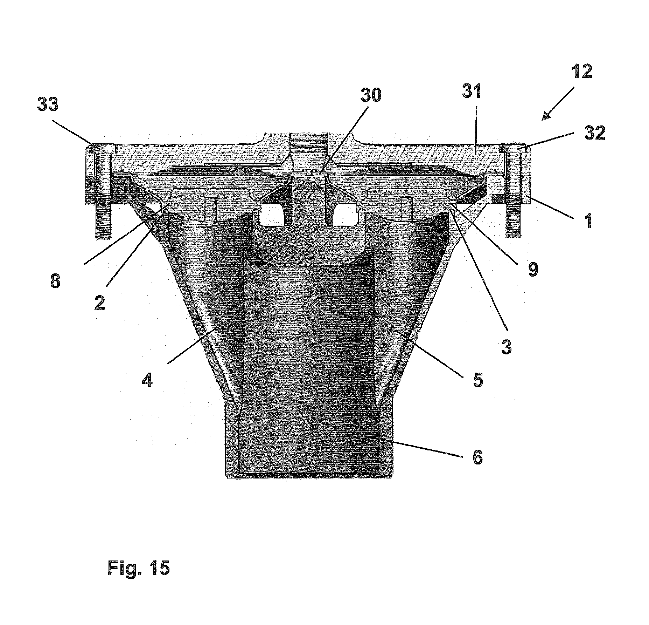

**Figur 15** zeigt eine schematische Darstellung des Membranventils 12 aus den Figuren 11 bis 14, wobei eine Schnittansicht durch das Membranventil 12 entlang der Linie A-A aus Fig. 11 dargestellt ist. Der Ventilkörper 1 weist auf die Ventilsitze 2, 3, die Eingangsrohre 4, 5, und das Ausgangsrohr 6. Weiterhin weist das Membranventil 12 zwei Funktionsflächen 8, 9 auf, die in dieser beispielhaften Ausführungsform einstückig ausgebildet sind und über einen Verbindungssteg 30 miteinander verbunden sind. Der Verbindungssteg 30 ermöglicht eine Stabilisierung der Funktionsflächen 8, 9 im Membranventil 12. Die Funktionsflächen 8, 9 liegen auf den Ventilsitzen 2, 3 auf, sodass sich das Membranventil 12 in der geschlossenen Position befindet. Erfindungsgemäß sind die zwei Funktionsflächen 8, 9 in einer Ebene angeordnet. Dieses ermöglicht vorteilhaft eine vergleichsweise einfache Integration des Membranventils 12 in herkömmliche Druckgasspeicher 14.

Im Übrigen wird auf die Ausführungen zu den Figuren 1 bis 9 verwiesen.

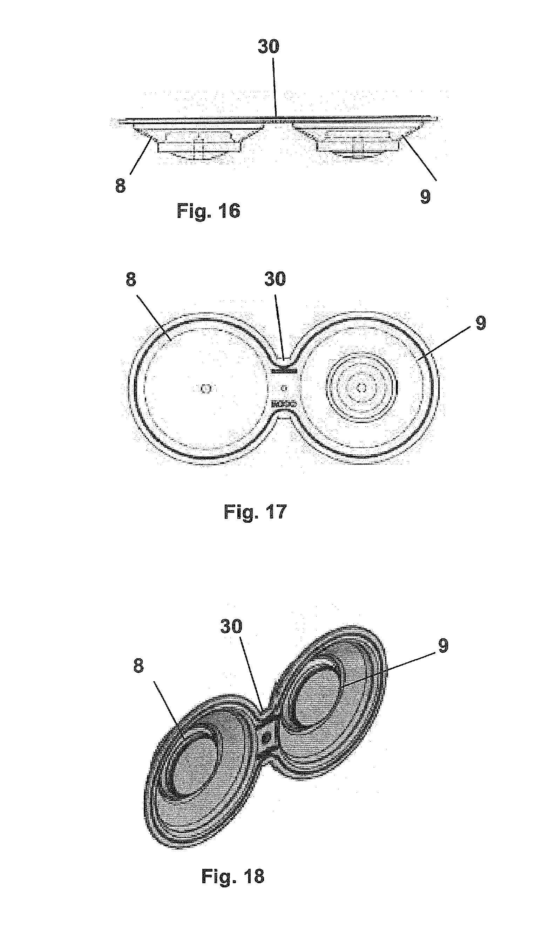

**Fig. 16** zeigt schematisch die Funktionsflächen 8, 9 des Membranventils 12 aus den Fig. 11-15 in einer Seitenansicht. Die Funktionsflächen 8, 9 sind in dieser bevorzugten Ausführungsform einstückig ausgebildet. Die Funktionsflächen 8, 9 sind über den Verbindungssteg 30 miteinander verbunden. Die Funktionsflächen 8, 9 sind erfindungsgemäß in einer Ebene angeordnet. Bevorzugt sind die einstückig ausgebildeten Funktionsflächen 8, 9 mit einem Spritzgussverfahren aus einem glasfaserverstärkten Polyphtalamidmaterial mit etwa 50 Gew. % Glasfaseranteil herstellbar.

**Fig. 17** zeigt schematisch die Funktionsflächen 8, 9 des Membranventils 12 aus den Fig. 11-15 in einer Draufsicht. Im Übrigen gilt das zu Fig. 16 ausgeführte.

**Fig. 18** zeigt schematisch die Funktionsflächen 8, 9 des Membranventils 12 aus den Fig. 11-15 in einer perspektivischen Ansicht. Im Übrigen gilt das zu Fig. 16 ausgeführte.

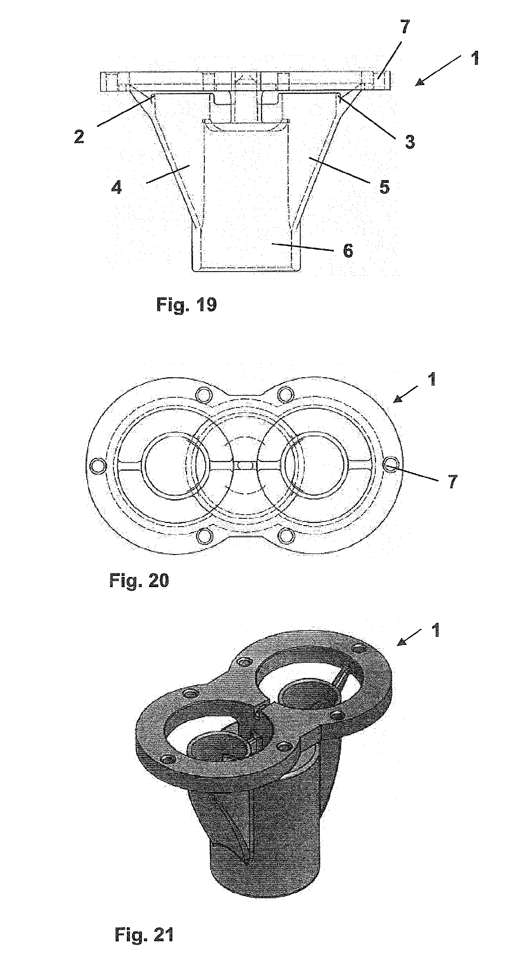

**Fig. 19** zeigt schematisch den Ventilkörper 1 des Membranventils 12 aus den Fig. 11-15 in einer Seitenansicht. Der Ventilkörper 1 weist auf die Öffnungen 7, zur Montage des Deckels 31, die Ventilsitze 2, 3, die Eingangsrohre 4, 5, und das Ausgangsrohr 6. Die Ventilsitze 2, 3 sind in einer Ebene angeordnet, sodass die Funktionsflächen 8, 9 ebenfalls in einer Ebene angeordnet werden können. Die Eingangsrohre 4,5 münden in das Ausgangsrohr 6. Das Ausgangsrohr 6 erstreckt sich senkrecht zu derjenigen Ebene, in der die Ventilsitze 2, 3 liegen. Mittels der Öffnungen 7 ist der Ventilkörper 1 auf einfache Weise an einem Druckgasspeicher 14 befestigbar. Dabei kann es sich bei den Öffnungen 7 um Gewindebohrungen handeln, so dass der Ventilkörper 1 auf einfache Weise am Druckgasbehälter 14 angeschraubt werden kann. Bevorzugt wird der Ventilkörper 1 mit einem Spritzgussverfahren aus einem glasfaserverstärkten Polyphtalamidmaterial mit etwa 50 Gew. % Glasfaseranteil hergestellt. Im Übrigen wird auf die Ausführungen zu Fig. 1 bis 5 verwiesen.

**Fig. 20** zeigt schematisch den Ventilkörper 1 des Membranventils 12 aus den Fig. 11-15 in einer Draufsicht. Der Ventilkörper 1 weist sechs Öffnungen 7 auf, die zur Montage des Ventilkörpers 1 mit dem Deckel 31 dienen. Im Übrigen wird auf die Ausführungen zu Fig. 19 verwiesen.

**Fig. 21** zeigt schematisch den Ventilkörper 1 des Membranventils 12 aus den Fig. 11-15 in einer perspektivischen Ansicht Im Übrigen wird auf die Ausführungen zu Fig. 19 und 20 verwiesen.

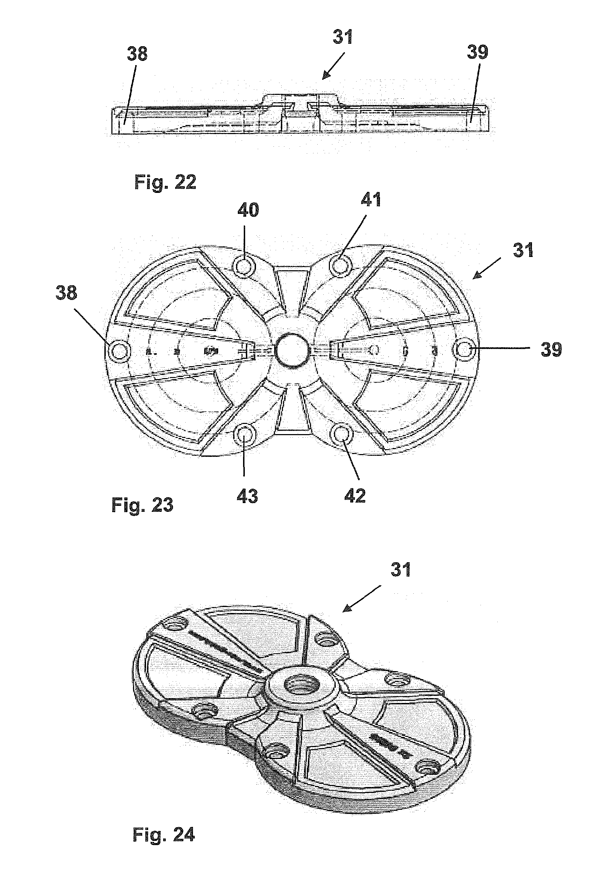

**Fig. 22** zeigt schematisch den Deckel 31 des Membranventils 12 aus den Fig. 11-15 in einer Seitenansicht. Der Deckel 31 weist die Öffnungen 38, 39 auf, die zur Montage des Deckels 31 auf den Ventilkörper 1 dienen. Bevorzugt handelt es sich bei den Öffnungen 38, 39 um Gewindebohrungen. Bevorzugt wird der Deckel 31 mit einem Spritzgussverfahren aus einem glasfaserverstärkten Polyphtalamidmaterial mit etwa 50 Gew. % Glasfaseranteil hergestellt.

**Fig. 23** zeigt schematisch den Deckel 31 des Membranventils 12 aus den Fig. 11-15 in einer Draufsicht. Der Deckel 31 weist die Öffnungen 38, 39, 40, 41, 42, 43 auf, die zur Montage des Deckels 31 auf den Ventilkörper 1 dienen. Bevorzugt handelt es sich bei den Öffnungen 38, 39, 40, 41, 42, 43 um Gewindebohrungen. Die Öffnungen 38, 39, 40, 41, 42, 43 sind in einer Ebene angeordnet, wodurch vorteilhaft eine besonders einfache Montage des Deckels 31 auf den Ventilkörper 1 möglich ist. Im Übrigen wird auf die Ausführungen zu Fig. 22 verwiesen.

**Fig. 24** zeigt schematisch den Deckel 31 des Membranventils 12 aus den Fig. 11-15 in einer perspektivischen Ansicht. Im Übrigen wird auf die Ausführungen zu den Fig. 22, 23 verwiesen.

### Bezugszeichenliste

- 1: Ventilkörper
- 2, 3: Ventilsitz
- 4,5: Eingangsrohr
- 6: Ausgangsrohr
- 7: Öffnung
- 8, 9: Funktionsflächen, Ventilmembrane
- 10, 11: Kraftpfeile
- 12: Membranventil
- 13: Ventilmodul
- 14: Druckgasspeicher
- 15: Druckimpulspfeil
- 19: Verfahrensbeginn: Membranventil in geschlossener Stellung
- 20: Verfahrensschritt: Öffnen des Membranventils
- 21: Entstehen zweier Teildruckimpulse
- 22: Durchqueren der Eingangsrohre
- 23: Erreichen des Ausgangsrohrs
- 24: Addition der Teildruckimpulse zum (Gesamt-) Druckimpuls
- 25: Durchquerung des Ausgangsrohrs
- 26: Austritt aus dem Ausgangsrohr
- 30: Verbindungssteg
- 31: Deckel
- 32,33,34,35,36,37: Schraube
- 38, 39, 40, 41, 42, 43: Öffnung

## Patentansprüche

1. Membranventil (12) mit mindestens zwei Funktionsflächen (8, 9), **dadurch gekennzeichnet, dass** die mindestens zwei Funktionsflächen (8, 9) in einer Ebene angeordnet sind.

2. Membranventil (12) nach Anspruch 1, **dadurch gekennzeichnet, dass** das Membranventil (12) einen Ventilkörper (1) mit mindestens zwei Ventilsitzen (2, 3) aufweist, wobei die mindestens zwei Ventilsitze (2, 3) in einer Ebene liegen.

3. Membranventil (12) nach Anspruch 2, **dadurch gekennzeichnet, dass** der Ventilkörper (1) mindestens zwei Eingangsrohre (4, 5) und ein Ausgangsrohr (6) aufweist, wobei die Eingangsrohre (4, 5) in das Ausgangsrohr (6) münden.

4. Membranventil (12) nach Anspruch 2 oder 3, **dadurch gekennzeichnet, dass** sich das Ausgangsrohr (6) senkrecht zu derjenigen Ebene erstreckt, in der die mindestens zwei Ventilsitze (2, 3) liegen.

5. Membranventil (12) nach einem der Ansprüche 2 bis 4, **dadurch gekennzeichnet, dass** der Ventilkörper (1) mit einem Spritzgussverfahren herstellbar ist.

6. Membranventil (12) nach einem der Ansprüche 2 bis 5, **dadurch gekennzeichnet, dass** der Ventilkörper (1) ein Polymermaterial aufweist, bevorzugt ein Polyamidmaterial, besonders bevorzugt ein Polyphtalamidmaterial.

7. Membranventil (12) nach Anspruch 6, **dadurch gekennzeichnet, dass** der Ventilkörper (1) ein glasfaserverstärktes Polyphtalamidmaterial aufweist, wobei der Glasfaseranteil zwischen 20 und 80 Gew. % beträgt, bevorzugt zwischen 30 und 70 Gew. %, besonders bevorzugt zwischen 40 und 60 Gew. % und ganz besonders bevorzugt zwischen 45 und 55 Gew. %.

8. Membranventil (12) nach einem der vorhergehenden Ansprüche, **dadurch gekennzeichnet, dass** die mindestens zwei Funktionsflächen (8, 9) pneumatisch und/oder elektrisch steuerbar sind.

9. Membranventil (12) nach einem der vorhergehenden Ansprüche, **dadurch gekennzeichnet, dass** die mindestens zwei Funktionsflächen (8, 9) einstückig ausgebildet sind.

10. Membranventil nach einem der vorhergehenden Ansprüche, **dadurch gekennzeichnet, dass** die mindestens zwei Funktionsflächen (8, 9) gleichzeitig betätigbar sind, wobei bevorzugt die mindestens zwei Funktionsflächen (8, 9) mit nur einem Betätigungsmittel, bevorzugt nur ein Magnetventil, betätigbar sind.

11. Ventilmodul (13), aufweisend ein Membranventil (12) nach einem der vorhergehenden Ansprüche und einen Druckgasspeicher (14).

12. Ventilmodul (13) nach Anspruch 11, **dadurch gekennzeichnet, dass** der Druckgasspeicher (14) ein Strangpressprofil, bevorzugt aus einem Aluminiummaterial, umfasst.

13. Ventilmodul (13) nach einem der Ansprüche 11 oder 12, **dadurch gekennzeichnet, dass** der Druckgasspeicher (14) mit Luft und/oder einem inerten Gas, bevorzugt Stickstoff, gefüllt ist.

14. Verfahren zur Erzeugung eines Druckimpulses mit einem Ventilmodul (13) nach einem der Ansprüche 11 bis 13, wobei das Membranventil (12) kurzzeitig geöffnet wird, wobei mindestens zwei Teildruckimpulse erzeugt werden, wobei die mindestens zwei Teildruckimpulse die Eingangsrohre (4, 5) durchqueren und zeitgleich im Ausgangsrohr (6) ankommen und sich im Ausgangsrohr (6) zu einem Druckimpuls vereinigen.

15. Verfahren nach Anspruch 14, **dadurch gekennzeichnet, dass** die Funktionsflächen (8, 9) gleichzeitig betätigt werden, wobei bevorzugt die Öffnungszeit des Membranventils (12) je Druckimpuls zwischen 90 und 110 Millisekunden beträgt, wobei bevorzugt der erzeugte Druckimpuls zum Spülen eines Filters aus dünnwandigen textilen Filterkörpern verwendet wird.
